(19) Europäisches Patentamt
European Patent Office
Office européen des brevets

(11) EP 3 495 409 A1

(12) EUROPEAN PATENT APPLICATION

(43) Date of publication:
12.06.2019 Bulletin 2019/24

(51) Int Cl.:
$C08K\ 3/04^{(2006.01)}$

(21) Application number: 17206398.4

(22) Date of filing: 11.12.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(71) Applicant: Borealis AG
1220 Vienna (AT)

(72) Inventors:
• Gkourmpis, Thomas
412 64 Göteborg (SE)
• Gitsas, Antonios
4021 Linz (AT)

(74) Representative: Kador & Partner PartG mbB
Corneliusstraße 15
80469 München (DE)

(54) POLYPROPYLENE COMPOSITION COMPRISING CARBONACEOUS STRUCTURES AND HAVING IMPROVED MECHANICAL PROPERTIES

(57) The present invention relates to a polypropylene composition comprising (a) a propylene polymer base resin, and (b) carbonaceous structures, wherein the carbonaceous structures (b) have a BET surface area of at least 200 m²/g and a density of less than 100 g/L, and wherein the propylene polymer base resin (a) has a density in the range 0.860-0.970 g/cm³ and is selected from the group consisting of isotactic polypropylene with tacticity of at least 50%; random and heterophasic propylene copolymers; and blends of these polymers including other olefinic or non-olefinic polymers, where these other polymers do not exceed 40 wt% of the total propylene polymer composition.

Fig. 5 Young's modulus as a function of filler loading

EP 3 495 409 A1

**Description**

TECHNICAL FIELD

The present invention relates to a polypropylene composition comprising carbonaceous structures. It also relates to a process for producing the polypropylene composition as well as to the use of the polypropylene composition in automotive applications. Further, the invention is also related to an article, preferably a component of an automobile comprising said polypropylene composition.

BACKGROUND OF THE INVENTION

In applications where high stiffness is needed, neat polypropylene does not fulfil the requirements and therefore needs to be compounded with high stiffness fillers in order to enter market segments which would otherwise not be accessible. When reinforced, polypropylene offers the advantage of its low density, compared to steel and concrete materials. Commonly used fillers are talc and glass fibers, which allow the reinforced material to achieve the desired mechanical properties. However, these fillers have a high density and thus contribute to increased overall density, consequently increasing the weight, of the fiber-reinforced polypropylene. Accordingly, such fillers counteract the benefit of the light weight of the polypropylene.

Another filler commonly used for reinforcement of polyolefin compositions is carbon black (CB). However, compositions used in automotive applications tend to contain excessive amounts of carbon black. High carbon black loadings have detrimental effects on the processing and mechanical properties, especially since the resulting compositions have high density and thus high weight. Moreover, high amounts of carbon black make the compositions brittle and stiffness/rigidity is reduced. On the other hand, high mechanical reinforcement commonly requires large amounts of carbon black (~35-40 wt%). These high loadings are also needed in automotive applications to improve the mechanical properties (high stiffness combined with high impact strength).

Accordingly, the industries seek for a reinforced composition fulfilling the demanding requirements of well-balanced mechanical properties such as high stiffness and high impact strength on one hand and low density on the other hand. Especially in automobile industry, components should combine the high stiffness and strength with light weight.

Carbonaceous structures have been proposed as fillers in polyolefin compositions. US 2006/231792 A1 discloses graphite nanoplatelets of expanded graphite and polymer composites produced therefrom. The graphite is expanded from an intercalated graphite by microwaves or radiofrequency waves in the presence of a gaseous atmosphere. The composition of nylon and xGnP shows improved mechanical properties such as flexural modulus, strength, and impact strength.

The graphene nanoparticles may be formed of thin, independent graphite flakes or platelets. The nanoparticles may also be shaped to have corners, or edges that meet to form points. The platelets may be fully isolated from the original graphite particle, or may be partially attached to the original particle. Also, more complex secondary structures such as cones are also included, see for example Schniepp, Journal of Physical Chemistry B,110 (2006) pp. 8535.

Graphene nanoplatelets (GNPs) are characterized in that the material is composed of one or several layers of two-dimensional hexagonal lattice of carbon atoms. The platelets have a length parallel to the graphite plane, commonly referred to as lateral diameter, and a thickness orthogonal to the graphite plane, commonly referred to as thickness. Another characteristic feature of GNPs is that the platelets are very thin yet have large lateral diameter, hence GNPs have a very large aspect ratio, i.e. ratio between the lateral diameter and the thickness.

Graphene nanoplatelets may also include graphene platelets that are somewhat wrinkled such as for example described in Stankovich et al, Nature 442, (2006), pp. 282. Additionally, graphene materials with wrinkles to another essentially flat geometry are included. In another aspect, the GNPs can be functionalised to improve interaction with the base resins. Non-limiting examples of surface modifications includes treatment with nitric acid; $O_2$ plasma; UV/Ozone; amine; acrylamine such as disclosed in US2004/127621 A1.

The graphene nanoparticles may be derived from treated graphite sheets, e.g. expanded graphite that can be exposed to high temperatures (e.g. in the range of from 600 to 1200 °C) so that the graphite sheets expand in dimension from 100 to 1000 or more times its original volume in an accordion-like fashion in the direction perpendicular to the crystalline planes of the graphite. These agglomerates may assume an elongated shape with dimensions in the order of 1 to 100 $\mu$m.

Possible production procedures of graphene nanoplatelets and single graphene sheets have been disclosed in e.g. US 2002/054995 A1, US 2004/127621 A1, US 2006/241237 A1 and US 2006/231792 A1. Such processes are for example further discussed by Stankovich et al, Nature 442, (2006) pp.282, and by Schniepp, Journal of Physical Chemistry B,110 (2006) pp. 853. Non-limiting examples of materials are Vor-X™ provided by Vorbecks Materials and xGNP™ provided by XG Science, Lansing, MI, USA.

US2002/054995 A1 discloses how nanoplatelets can be created by high pressure mill giving an aspect ratio between the lateral diameter and the thickness of 1500:1 and a thickness 1-100 nm.

WO 03/024602 A1 discloses separated graphite nanostructures formed of thin graphite platelets having an aspect ratio of at least 1500:1. The graphite nanostructures are created from synthetic or natural graphite using a high-pressure mill. The resulting graphite nanostructures can be added to polymeric materials to create polymer composites having increased mechanical characteristics, including an increased flexural modulus, heat deflection temperature, tensile strength, electrical conductivity, and notched impact strength. The effects observed in this disclosure require filler loadings, if added to polypropylene, as high as 38 wt% - 53 wt%.

Therefore, it is an object of the present invention to provide a polypropylene composition combining advanced mechanical property profile, i.e. high stiffness/rigidity and impact strength at low density as required in automotive applications, and low filler loading required for improved processability.

SUMMARY OF THE INVENTION

It was found that this object can be achieved by an improved polypropylene composition comprising

(a) a propylene polymer base resin, and

(b) carbonaceous structures

wherein the carbonaceous structures (b) have a BET surface area of at least 200 $m^2$/g and a density of less than 100 g/L, and wherein the propylene polymer base resin (a) has a density in the range 0.860-0.970 $g/cm^3$ and is selected from the group consisting of isotactic polypropylene with tacticity of at least 50%; random and heterophasic propylene copolymers; and blends of these polymers including other olefinic or non-olefinic polymers, where these other polymers do not exceed 40 wt% of the total propylene polymer composition

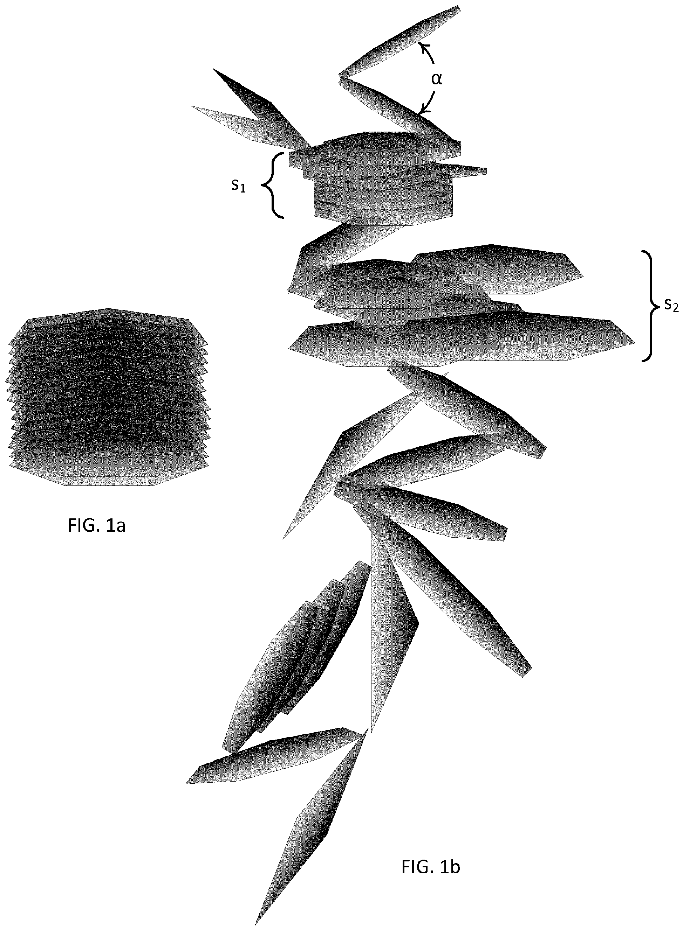

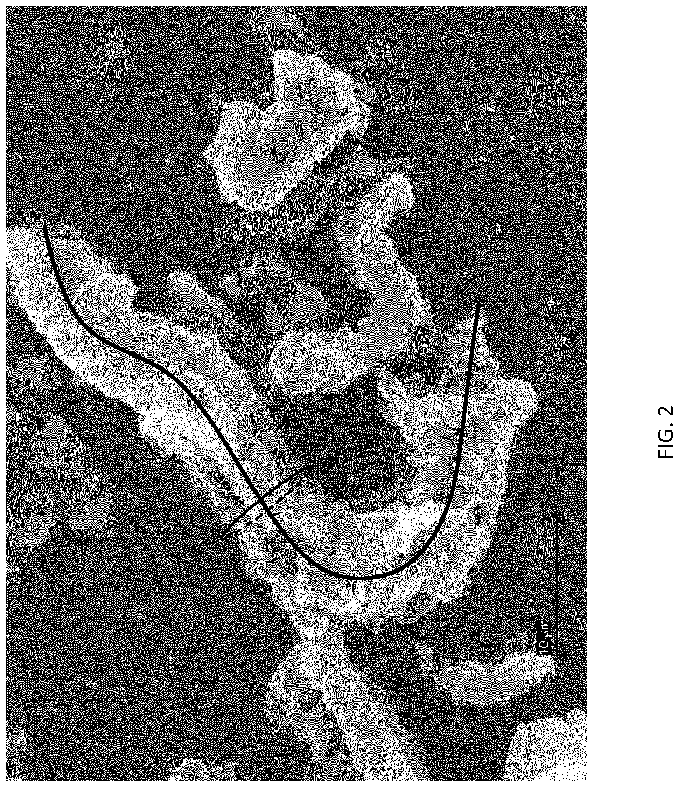

The term "carbonaceous structure" refers to partially dispersed clusters of a plurality of carbonaceous components, wherein each carbonaceous component is constituted by allotropes of carbon, in particular graphite and graphene. According to the present invention, the carbonaceous structure of the present invention may be a reduced graphite oxide worm-like (rGOW) structure, or particle. The rGOW structure may comprise any number of reduced oxidized graphene platelets, wherein at least some of the platelets are in a plane that is not parallel with that of an adjacent platelet, as shown in Fig. 1 b. Although the rGOW platelets are referred to as planar, they are typically not as planar as, for example, graphene sheets, but rather include wrinkles and deformities that result from the oxidation/reduction processes by which the particles have been treated. As a result, the rGOW platelets are thicker than graphene sheets although they still retain a generally planar shape having a diameter that is several times greater than the thickness of the platelet. As can be seen in the photomicrograph of Fig. 2, these platelets include multiple sub-sections that are at distinct angles to each other. This unevenness contributes to the high surface area and low bulk density of the particles.

An adjacent platelet is defined as a platelet that is joined directly to the given platelet on either major side of the given platelet. A platelet is not adjacent if it is joined to the given platelet via only a third platelet. A platelet may be at an angle to a first adjacent platelet on one side and retain a parallel structure with a second adjacent platelet on the opposed side. Many of the platelets in an rGOW structure can remain in a graphite configuration (see Fig. 1a) in which they are parallel to each other and remain bound together by van der Waals forces. This is for example illustrated by stacks s1 and s2 in Fig. 1 b. Particles of rGOW do not typically have extensive graphitic structures and different embodiments of rGOW structures may be limited to parallel platelet composite structures containing fewer than 15, preferably fewer than 12, more preferably fewer than 11 adjacent parallel platelets. rGOW particles exhibit a structure where any dimension of the particle, such as length L or diameter d, is greater than the sum of thicknesses w of all the graphene platelets in the particle. For example, if the thickness w of a single graphene platelet is about 1 nm, then an rGOW particle comprising 1,000 platelets would be greater than 1 μm in both length L and diameter d. These three-dimensional particles also have an extension of at least 50 nm along each of the x, y and z axes as measured through at least one origin in the particle. An rGOW particle is not a planar structure and has a morphology that distinguishes it from both graphite (stacks of graphene platelets) and individual graphene sheets. It is notable however, that rGOW particles can be exfoliated into single platelets, or stacks of platelets, that can have at least one extension along any of x, y and z axes that is less than 100 nm, preferably less than 50 nm, more preferably less than 10 nm, or even more preferably less than 5 nm. After an rGOW particle has been exfoliated, the resulting single platelets or stacks of parallel platelets are no longer rGOW particles.

The rGOW particles described herein can comprise a plurality of graphene platelets and in various embodiments may include greater than 10, preferably greater than 100, more preferably greater than 1000 graphene platelets. In various embodiments, the particles may be linear or serpentine, can take roughly spherical shapes, and in some cases may be cylindrical. The structure of an rGOW particle can be described as accordion-like because of the way the particle expands longitudinally due to the alternating edges at which the platelets remain joined. For example, as shown in Fig. 1b, at least some of the adjacent graphene planes are not parallel and are at angles to each other. As may be seen in Fig. 1b, at least some of the adjacent graphene planes may be positioned at an angle $\alpha$ relatively each other, wherein the angle $\alpha$ may for example be about 25°. Various embodiments may include one or more pairs of adjacent graphene platelets that are joined at angles of, for example, 10°, 25°, 35°, 45°, 60° or 90°. Different adjoining pairs of graphene platelets may remain joined at different edges or points, so the graphene platelets are not necessarily canted in the same direction. If the adjacent graphene platelets remain attached randomly to each other at platelet edges after expansion, the particle will extend in a substantially longitudinal direction.

As may be seen in Figs. 1b and 2, the rGOW particle has a transverse extension, or diameter d, and a longitudinal extension being substantially perpendicular to the transverse extension, or length L. Further, each of the platelets in the rGOW particle has an extension in the longitudinal direction, or thickness w. rGOW particles thus have elongated, expanded, worm-like structures that can have an aspect ratio, i.e. length L/diameter d, that can be greater than 1:1, greater than 2:1, greater than 3:1, greater than 5:1 or greater than 10:1. The length L of an rGOW particle is the longest line that passes through a central longitudinal core of the particle from one end to the other (Fig. 2). This line may be curved or linear, or have portions that are curved or linear, depending on the specific particle. The line runs substantially perpendicular to the average plane of the platelets in any particular portion along the line. The length L of an rGOW particle can be greater than 1.0 $\mu$m, greater than 2.0 $\mu$m, greater than 5.0 $\mu$m., greater than 10 $\mu$m or greater than 100 $\mu$m. The diameter d of the rGOW particle is deemed to be the diameter of the smallest circle that can fit around the particle at its midpoint (Fig. 2). The diameter d (diameter of the circle shown in Fig. 2) can be, for example, less than 200 $\mu$m, less than 100 $\mu$m, less than 50 $\mu$m, less than 20 $\mu$m, less than 10 $\mu$m, less than 5 $\mu$m, less than 2 $\mu$m or less than 1 $\mu$m. Further, the diameter d may be greater than 50 nm, greater than 100 nm, greater than 1 $\mu$m, greater than 10 $\mu$m., greater than 100 $\mu$m. Preferred diameter ranges include 100 nm to 100 $\mu$m., 500 nm to 100 $\mu$m., 500 nm to 50 $\mu$m., 2.0 $\mu$m to 30 $\mu$m, 2.0 $\mu$m to 20 $\mu$m, 2.0 $\mu$m to 15 $\mu$m, 2.0 $\mu$m to 10 $\mu$m, 1.0 $\mu$m to 5 $\mu$m, 100 nm to 5 $\mu$m, 100 nm to 2 $\mu$m, 100 nm to 1 $\mu$m. The diameter d of an rGOW particle along its length L need not be constant and can vary by a factor of greater than 2, greater than 3 or greater than 4 along the length L of the rGOW particle.

An rGOW particle may contain carbon, oxygen and hydrogen and may be essentially void of other elements. A particle is essentially void of an element if the element is absent or is present only as an impurity. In specific embodiments, an rGOW particle can comprise greater than 80%, greater than 90%, greater than 95% or greater than 99% carbon by weight. Some particles may include oxygen, and particularly covalently bound oxygen, at concentrations by weight of greater than 0.1%, greater than 0.5%, greater than 1.0%, greater than 5.0%, greater than 10.0%, greater than 14.0%, less than 25%, less than 15%, less than 10%, less than 5.0%, less than 3%, less than 2% or less than 1.0%. Hydrogen content may be greater than 0.1% or greater than 1% by weight. Further, hydrogen content may be less than 1%, less than 0.1% or less than 0.01% by weight. Heteroatoms such as nitrogen or sulfur may be present at amounts greater than 0.01% or greater than 0.1% by weight.

Reduced graphite oxide worm particles can exhibit a low density. For example, in various embodiments the particles may have a bulk density of less than 100 g/L, less than 50 g/L, less than 30 g/L, less than 20 g/L, less than 10 g/L, greater than 5 g/L, greater than 10g/L or greater than 15 g/L when measured using ASTM D7481-09. When rGOW particles are in the form of clusters, the density may be between 15 g/L and 100 g/l. On the other hand, when densities are between 5 g/L and 15 g/L, the rGOW particles are in the form of worms or densified worms. These particles may also exhibit high surface area and may have BET (Brunauer, Emmett and Teller, ASTM D6556-04) surface areas of greater than 200 m$^2$/g, greater than 300 m$^2$/g, greater than 500 m$^2$/g, greater than 700 m$^2$/g, greater than 900 m$^2$/g or greater than 1000 m$^2$/g. The rGOW particles may also exhibit high structure, and when measured using oil absorption number (OAN) can exhibit structures of greater than 500 mL/100 g, greater than 1000 mL/100 g, greater than 1500 mL/100 g or greater than 2000 mL/100 g (ASTM D2414-16).

One indicator of the oxygen content in a rGOW particle is the volatile material content of the particle. The rGOW particles can have a volatile content, as measured by thermogravimetric analysis (TGA) from 125°C to 1000°C under inert gas, of greater than 1%, greater than 1.5%, greater than 2.0%, greater than 2.5%, greater than 5%, greater than 10%, greater than 15% or greater than 20%. Further, the volatile content by the same technique can be less than 30%, less than 25%, less than 20%, less than 15%, less than 10%, less than 5%, less than 3% or less than 2%. Traditionally, the high oxygen content lowers the conductivity of a material and makes it insulating. Therefore, graphene oxide used as conductive filler is usually reduced in order to lower the oxygen content. On the other hand, the carbonaceous structures of the present invention surprisingly exhibit high conductivity despite the high oxygen levels.

The oxygen content of the rGOW particles, when compared to the parent graphite oxide, can be reduced by at least 25%, at least 50% or at least 75%. Similarly, the energetic content of the particles (as measured by Differential Scanning Calorimetry, DSC) can be reduced by, for example, at least 25%, at least 50% or at least 75%. The decomposition energy of the rGOW particles can be, for example, less than 150 J/g, less than 100 J/g, less than 50 J/g or less than 20 J/g.

The graphitic structure of an rGOW particle can be investigated by Raman spectroscopy. Pure graphite has a Raman spectrum with a strong G band (1580 cm[-1]) and non-existent D band (1350 cm[-1]). Graphite oxide exhibits a strong D band as well as G band. Reduced graphite oxide and rGOW particles have a strong D band that in many cases is stronger than the G band (FWHM). The ratio of the D band to G band may be greater than 1.0, greater than 1.1 or greater than 1.2.

Particles of rGOW can often be differentiated from graphite and similar materials due to differences in crystallinity. Crystallinity of rGOW particles can be determined by Raman spectroscopy and in various embodiments the rGOW particles can exhibit crystallinity values of less than 40%, less than 30% or less than 20%. X-ray diffraction can also be helpful in differentiating between graphite and materials such as graphite oxide and rGOW particles that exhibit different interlayer spacing than does graphite. Graphite has a strong XRD peak between 25° and 30°, while rGOW particles typically have no discernible peak in this range.

It is worth noting that the definition of carbonaceous structures according to the present invention does not include carbon nanotubes.

It has been found that the polypropylene composition according to the present invention achieves an unexpectedly increased stiffness/rigidity at lower filler loadings compared to conventional filler-loaded polymer compositions. At the same time, the Young's modulus and the thermal conductivity are increased. Furthermore, the processability in the production process was excellent due to the greatly increased homogeneity of the carbonaceous structures distributed in the polypropylene resin matrix.

The inventors have found that carbonaceous structures that are compounded in a propylene polymer base resin may change their morphology during compounding in the compounder, assumingly due to the dedensification. Thus, the final polypropylene composition of the present invention possesses new advanced and surprising properties, which enable new applications in the automotive area.

Young's modulus, also known as the elastic modulus, is a commonly known technical term that represents a measure of the stiffness of a solid material. It is a mechanical property of linear elastic solid materials, and defines the relationship between stress (force per unit area) and strain (proportional deformation) in a material.

The term "copolymer" refers to a polymer made from at least two monomers. It includes, for example, copolymers, terpolymers and tetrapolymers.

It is a specific feature of the process according to the present invention that the carbonaceous structures incorporated into the base resin are intimately mixed in the compounding step and change their morphology thereby. Without wishing to be bound by theory, it is assumed that clusters and/or stacks of graphene platelets are at least partly exfoliated in the compounding step to drastically increase BET surface area and decrease the lateral diameter of the nanoparticles. As a result, the increase in tensile modulus and thermal conductivity of the polypropylene compositions of the present invention is surprisingly achieved by an increase in BET surface area and a decrease in lateral diameter of the carbonaceous structures after compounding. Further, the increased tensile modulus and thermal conductivity of the polypropylene compositions of the present invention may also be explained by good dispersion as a consequence of the specific physical features of carbonaceous structures, allowing an improved exfoliation in the polymer matrix and thus less agglomerates. Thus, a superior homogeneity in the distribution of the carbonaceous structures in the propylene polymer matrix is achieved which is thought to be responsible for the improved property profile of the inventive compositions.

The polypropylene composition of the present invention may comprise a propylene polymer base resin, optionally being a polymeric blend comprising one or more propylene polymers, and carbonaceous structures, wherein the weight percentage of carbonaceous structures is from 1 wt% to 20 wt%, preferably from 2 to 15 wt%. Further preferred weight ranges may be from 1 to 10 wt%, more preferably from 2 to 10 wt%, and most preferably from 3 to 10 wt%. Further preferred ranges are from 1 to 6 wt%, from 2 to 5 wt% or from 3.5 to 8 wt%. Any of the above limits may be combined with each other. The lower limit is due to mechanical requirements and the upper limit is due to limitation in the viscosity and surface roughness of the composition.

The polypropylene composition of the present invention surprisingly provides a combination of advantages. Not only does it improve processability due to comparatively low viscosity (higher $MFR_2$ values) than conventional polyolefin compositions containing carbon black filler. Unexpectedly, the carbonaceous structures according to the present invention provide higher stiffness/rigidity expressed by tensile modulus as well as higher impact strength at lower loadings. Moreover, the thermal conductivity of the polymer composition is improved.

The polypropylene composition according to the present invention may have a tensile modulus satisfying the equation:

$$y = k \cdot x + b \qquad\qquad \text{(I)}$$

wherein x is the amount of the carbonaceous structures in the polypropylene composition, expressed in wt% of the total weight of the polypropylene composition;

k is a coefficient having values from 200 to 300; and

b is the tensile modulus of the propylene polymer base resin.

The coefficient k may have values from 220 to 295, preferably 240 to 290, more preferably 248 to 287.
The polypropylene composition of the present invention preferably exhibit a tensile modulus (expressed as Young's modulus) of at least 3000 MPa, more preferably at least 3200 MPa, determined according to ISO 527-2, at a filler loading of 5 wt%, based on the weight of the total polypropylene composition. The polypropylene composition of the present invention preferably exhibit a tensile modulus of at least 2500 MPa, more preferably at least 2700 MPa, even more preferably at least 3000 MPa, determined according to ISO 527-2, at a filler loading of 2.5 wt%, based on the weight of the total polypropylene composition. Most preferably, the polypropylene composition of the present invention exhibit a tensile modulus of at least 2000 MPa, more preferably at least 2200 MPa, even more preferably at least 2500 MPa, determined according to ISO 527-2, at a filler loading of 1 wt%, based on the weight of the total polypropylene composition.
The polypropylene composition of the present invention may have thermal conductivity satisfying the equation:

$$\sigma = m \cdot x + l \qquad (II)$$

wherein x is the amount of the carbonaceous structures in the polypropylene composition, expressed in wt% of the total weight of the polypropylene composition;

m is a coefficient having values from 0.01 to 0.07; and

I is the thermal conductivity of the propylene polymer base resin.

The coefficient m may have values from 0.015 to 0.05, preferably from 0.02 to 0.03. In particular, the coefficient m is 0.024.
Almost all pure propylene polymer base resins have thermal conductivity I of 0.24 W/m·K.
The compositions of the present invention may exhibit an increased thermal conductivity of at least 0.28 W/m·K, more preferably at least 0.30 W/m·K, even more preferably at least 0.35 W/m·K at a filler loading of 5 wt%, based on the weight of the total polypropylene composition, determined according to the laser flash method (ISO 18755; LFA 447, Netzsch GmbH) at 3M (ESK).
The polypropylene according to the present invention has a density in the range 0.860-0.970 g/cm$^3$ and is selected from the group consisting of isotactic polypropylene with tacticity of at least 50%; random and heterophasic propylene copolymers; and blends of these polymers including other olefinic or non-olefinic polymers, where these other polymers do not exceed 40 wt% of the total propylene polymer composition. The polypropylene can be e.g. a commercially available polymer or can be prepared according to or analogously to known polymerization process described in the chemical literature.
The polypropylene can be unimodal or multimodal with respect to one or more of molecular weight distribution, comonomer distribution or density distribution. A multimodal polyolefin may have at least two polymer components which have different weight average molecular weight, preferably a lower weight average molecular weight (LMW) and a higher weight average molecular weight (HMW). A unimodal polyolefin is typically prepared using a single stage polymerization, e.g. solution, slurry or gas phase polymerization, in a manner well-known in the art. A multimodal (e.g. bimodal) polypropylene can be produced by mechanically blending two or more, separately prepared polymer components or by in-situ blending in a multistage polymerization process during the preparation process of the polymer components. Both mechanical and in-situ blending are well-known in the field. A multistage polymerization process may preferably be carried out in a series of reactors, such as a loop reactor which may be a slurry reactor and/or one or more gas phase reactor(s). Preferably a loop reactor and at least one gas phase reactor is used. The polymerization may also be preceded by a pre-polymerization step.
Other examples of propylene polymers are: homopolypropylene, e.g. isotactic polypropylene; or propylene copolymers such as EPDM (ethylene copolymerized with propylene and a diene such as hexadiene, dicyclopentadiene, or ethylidene norbornene). The comonomers can be incorporated randomly or in block and/or graft structures.
According to the present invention, the olefin polymer may comprise or may be a heterophasic olefin copolymer, e.g. a heterophasic propylene copolymer. The heterophasic propylene copolymer may preferably be a heterophasic copolymer comprising a propylene random copolymer as matrix phase (RAHECO) or a heterophasic copolymer having a propylene homopolymer as matrix phase (HECO). A random copolymer is a copolymer where the comonomer part is randomly distributed in the polymer chains and it also consists of alternating sequences of two monomeric units of random length (including single molecules). It is preferred that the random propylene copolymer comprises at least one comonomer selected from the group consisting of ethylene and $C_4$-$C_8$ alpha-olefins. Preferred $C_4$-$C_8$ alpha-olefins are 1-butene, 1-pentene, 4-methyl-1-pentene, 1-hexene, 1-heptene or 1-octene, more preferred 1-butene. A particularly preferred random propylene copolymer may comprise or consist of propylene and ethylene. Furthermore, the comonomer content of the polypropylene matrix is preferably 0.5 to 10 wt%, more preferably 1 to 8 wt% and even more preferably 2 to 7 wt %. For combining optimum processability with the required mechanical properties, the incorporation of the comonomer can be controlled in such a way that one component of the polypropylene contains more comonomer than the other. Suitable polypropylenes are described e.g. in WO 03/002652.

The polypropylene compositions may be crosslinkable. "Crosslinkable" means that the composition layer can be crosslinked before the use in the end application thereof. In crosslinking reaction of a polymer, interpolymer crosslinks (bridges) are primarily formed. Crosslinking can be initiated by free radical reaction using irradiation or preferably using a crosslinking agent, which is typically a free radical generating agent, or by the incorporation of crosslinkable groups into polymer component(s), as known in the art.

The free radical generating crosslinking agent can be a radical forming crosslinking agent which contains at least one -O-O- bond or at least one -N=N- bond. More preferably, the crosslinking agent is a peroxide, whereby the crosslinking is preferably initiated using a well-known peroxide crosslinking technology that is based on free radical crosslinking and is well described in the field. The peroxide can be any suitable peroxide, e.g. such conventionally used in the field.

Crosslinking may also be achieved by incorporation of crosslinkable groups.

When peroxide is used as a cross-linking agent, the cross-linking agent is preferably used in an amount of less than 10 wt%, more preferably in an amount of between 0.1 to 8 wt%, still more preferably in an amount of 0.2 to 3 wt% and even more preferably in an amount of 0.3 to 2.5 wt% with respect to the total weight of the composition to be cross-linked.

Non-limiting examples of peroxidic crosslinking agents are organic peroxides, such as di-*tert*-amylperoxide, 2,5-di(*tert*-butylperoxy)-2,5-dimethyl-3-hexyne, 2,5-di(*tert*-butylperoxy)-2,5-dimethylhexane, *tert*-butylcumylperoxide, di(*tert*-butyl)peroxide, dicumylperoxide, butyl-4,4-bis(*tert*-butylperoxy)-valerate, 1,1-bis(*tert*-butylperoxy)-3,3,5-trimethylcyclohexane, *tert*-butylperoxybenzoate, dibenzoylperoxide, bis(*tert* butylperoxyisopropyl)benzene, 2,5-dimethyl-2,5-di(benzoylperoxy)hexane, 1,1-di(*tert*-butylperoxy)cyclohexane, 1,1-di(*tert* amylperoxy)cyclohexane, or any mixtures thereof. Preferably, the peroxide is selected from 2,5-di(*tert*-butylperoxy)-2,5-dimethylhexane, di(*tert*-butylperoxyisopropyl)benzene, dicumylperoxide, *tert*-butylcumylperoxide, di(*tert*-butyl)peroxide, or mixtures thereof.

In another embodiment of the present invention the polypropylene composition can also contain further additive(s), such as antioxidant(s), stabiliser(s), processing aid(s), scorch retarder(s), filler(s), metal deactivator(s), crosslinking booster(s), flame retardant additive(s), acid or ion scavenger(s), additional inorganic filler(s), or any mixtures thereof. Additives are typical use in total amount of from 0.01 wt% to 10 wt%.

Non-limiting examples of antioxidants are e.g. sterically hindered or semi-hindered phenols, aromatic amines, aliphatic sterically hindered amines, organic phosphites or phosphonites, thio compounds, and mixtures thereof.

Preferably, the antioxidant is selected from the group of diphenyl amines and diphenyl sulfides. The phenyl substituents of these compounds may be substituted with further groups such as alkyl, alkylaryl, arylalkyl or hydroxy groups.

Preferably, the phenyl groups of diphenyl amines and diphenyl sulfides are substituted with *tert*-butyl groups, preferably in meta or para position, which may bear further substituents such as phenyl groups.

More preferred, the antioxidant is selected from the group of 4,4'-bis(1,1'dimethylbenzyl)diphenylamine, para-oriented styrenated diphenylamines, 6,6'-di-*tert*-butyl-2,2'-thiodi-p-cresol, tris(2-*tert*-butyl-4-thio-(2'-methyl-4'hydroxy-5'-*tert*-butyl)phenyl-5-methyl)phenylphosphite, polymerized 2,2,4-trimethyl-1,2-dihydroquinoline, or derivatives thereof. Of course, not only one of the above-described antioxidants may be used but also any mixture thereof.

The amount of an antioxidant is preferably from 0.005 to 2.5 wt%, based on the weight of the polypropylene composition. The antioxidant(s) are preferably added in an amount of 0.005 to 2 wt%, more preferably 0.01 to 1.5 wt%, even more preferably 0.04 to 1.2 wt%, based on the weight of the polypropylene composition. In a further preferable embodiment, the polypropylene composition may comprise free radical generating agent(s), one or more antioxidant(s) and one or more scorch retarder(s).

The scorch retarder (SR) is a well-known additive type in the field and can i.e. prevent premature crosslinking. As also known the SR may also contribute to the unsaturation level of the polymer composition. As examples of scorch retarders allyl compounds, such as dimers of aromatic alpha-methyl alkenyl monomers, preferably 2,4-di-phenyl-4-methyl-1-pentene, substituted or unsubstituted diphenylethylenes, quinone derivatives, hydroquinone derivatives, monofunctional vinyl containing esters and ethers, monocyclic hydrocarbons having at least two or more double bonds, or mixtures thereof, can be mentioned. Preferably, the amount of a scorch retarder is within the range of 0.005 to 2.0 wt%, more preferably within the range of 0.005 to 1.5 wt%, based on the weight of the polypropylene composition. Further preferred ranges are e.g. from 0.01 to 0.8 wt%, 0.03 to 0.75 wt%, 0.03 to 0.70 wt%, or 0.04 to 0.60 wt%, based on the weight of the polypropylene composition. One preferred SR added to the polypropylene composition is 2,4-diphenyl-4-methyl-1-pentene.

Examples of processing aids include but are not limited to metal salts of carboxylic acids such as zinc stearate or calcium stearate; fatty acids; fatty amides; polyethylene wax; copolymers of ethylene oxide and propylene oxide; petroleum waxes; non-ionic surfactants and polysiloxanes.

Non-limiting examples of additional fillers are clays precipitated silica and silicates; fumed silica calcium carbonate.

It is intended throughout the present description that the expression "compounding" embraces mixing of the material according to standard methods to those skilled in the art. Non-limiting examples of compounding equipments are continuous single or twin screw mixers such as Farell™, Werner and Pfleiderer™, Kobelco Bollling™ and Buss™, or internal batch mixers, such as Brabender™ or Banbury™.

Any suitable process known in the art may be used for the preparation of the reinforced polypropylene compositions of the present invention such as dry-mixing, solution mixing, solution shear mixing, melt mixing, extrusion, etc. It is however preferred to prepare the semiconductive polyolefin composition by melt-mixing said olefin polymer base resin (a) with carbonaceous structures (b) in an extruder, such as a Brabender compounder.

The present invention is also directed to a process for producing the preferred inventive polypropylene composition, comprising pre-mixing the carbonaceous structures and optionally another solid conductive filler such as carbon black. Pre-mixing as used herein shall indicate that the mixing occurs before the resulting mixture is contacted and mixed with the olefin polymer base resin. The premixing may be conducted in a dispersant such as isopropanol. Preferably, the olefin polymer base resin is subsequently added to the dispersed carbonaceous structures and/or filler mixture, before the complete mixture is introduced into a compounder, preferably an extruder, such as a Brabender compounder.

The object can also be achieved by the use of such a polypropylene composition in an article or component for an automobile.

Further, the present invention is concerned with a polypropylene composition obtainable by such a process.

Below, the invention is described by virtue of non-limiting examples.

BRIEF DESCRIPTION OF THE DRAWINGS

Embodiments of the invention will now be described by way of examples with reference to the accompanying drawings, of which:

Fig. 1a     Schematic graphite configuration
Fig. 1b     Schematic structure of a rGOW particle
Fig. 2     SEM of an rGOW particle
Fig. 3     SEM of GNP M-25 and CS-1
Fig. 4     SEM of GNP M-25 and CS-2
Figs. 5     Young's Modulus as a function of filler amount for the inventive samples
Fig. 6     Thermal conductivity as a function of filler amount for the inventive samples

DETAILED DESCRIPTION OF PREFERRED EMBODIMENTS

**Examples**

**1. Materials**

**(a) Polymer Base Resins**

PP1 is an isotactic propylene homopolymer ($MFR_2$=3.3 g/10 min, Isotacticity Index: 98%, $M_w$=300 kg/mol, $T_m$=163°C), commercially available from Borealis AG.

PP2 is a high crystallinity propylene homopolymer ($MFR_2$=8.0 g/10 min, density: 0.900-0.910 $g/cm^3$), commercially available from Borealis AG.

**(b) Carbonaceous structures**

GNP M-25 was obtained from XG Sciences, Lansing, MI USA. It consists of carbonaceous structures having a BET surface area of 120 to 150 $m^2/g$, a particle size distribution of 5 to 25 $\mu$m, and a content of volatiles of lower than 1 wt%.

CS-1, CS-2, CS-3, CS-4 and CS-5 are carbonaceous structures which form clusters or worm-like structures and are obtained from Cabot Corporation, Boston, MA, USA. The properties of the carbonaceous structures are summarized in Table 1.

**Table 1**

| Sample | BET ($m^2$/g) | Volatile (%) | PSD (μm) | Form | Density (g/L) |
|---|---|---|---|---|---|
| GNP M-25 | 120-150 | <1 | 5-25 | Platelets | 2200 |
| CS-1 | 400 | 10 | N/A | Worms | 10 |
| CS-2 | 400 | 10 | 8.8 | Loose Clusters | 20 |
| CS-3 | 480 | 2.6 | N/A | Worms | 6-8 |
| CS-4 | 450 | 2 | 25 | Loose Clusters | 20 |
| CS-5 | 674 | 5.4 | N/A | Worms | 8 |

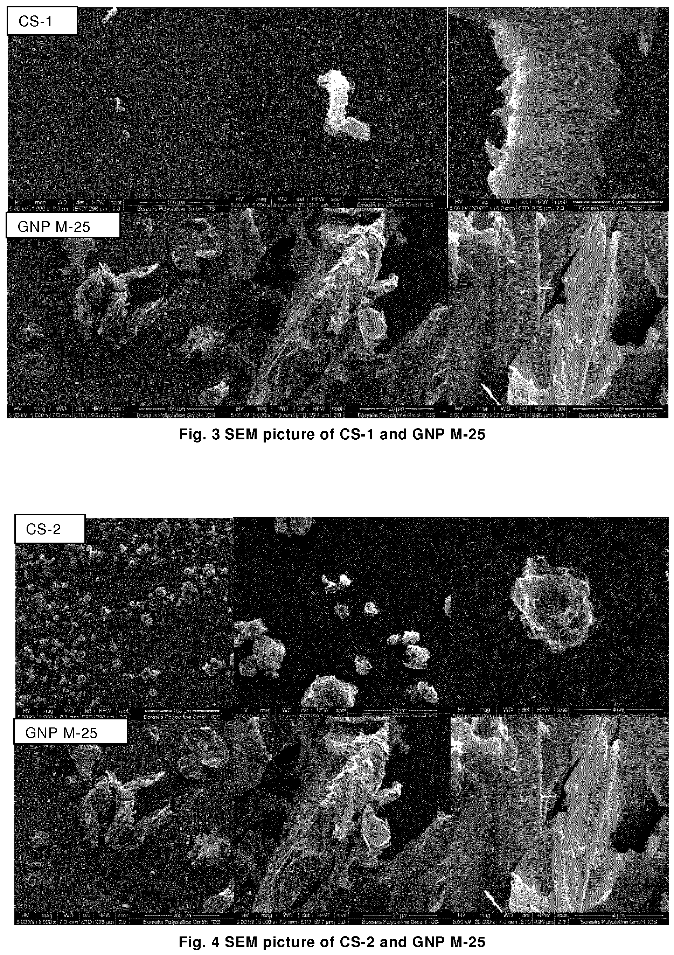

Figs. 3 and 4 show SEM photographs at different magnifications of selected carbonaceous structures GNP M-25 (comparative), CS-2 (inventive) and CS-1 (inventive). These pictures represent the different fillers and give a clear indication of the relative level of agglomeration present. GNP M-25 shown in Fig. 3 has a relatively high agglomeration having particles with a maximum size of greater than 100 μm and an average thickness of 10-100 μm. CS-2 shown in Fig. 4 exhibits smaller agglomerates or clusters of spherical shape of size not more than 5 μm. CS-1 shown in Fig. 3 exhibits smaller worm-like agglomerates with an average size of 5-25 μm. CS-3, CS-4 and CS-5 have similar structures to those of CS-1 and CS-2.

**(c) Fillers**

Aerosil R8200, obtained from Evonik Industries, is a modified fumed silica aftertreated with hexamethyldisilazane, density: 2.00 g/cm$^3$, mean particle diameter D50: 0.04 μm, BET surface area: 160 $m^2$/g,

**2. Measurement methods**

**(a) Melt Flow Rate**

The $MFR_2$ was measured with 2.16 kg load at 230°C for polypropylene according to ISO 1133. The $MFR_{21}$ was measured with 21.6 kg load at 230°C for polypropylene according to ISO 1133.

**(b) Melt temperature ($T_m$)**

Differential Scanning Calorimetry (DSC) experiments were run on a TA Instruments Q2000 device calibrated with Indium, Zinc, Tin according to ISO 11357-1. The measurements were run under nitrogen atmosphere (50 mL min-1) on 5±0.5 mg samples in a heat/cool/heat cycle with a scan rate of 10 °C/min between -30 °C and 225 °C according to ISO 11357-3. Melting (Tm) and crystallisation (Tc) temperatures were taken as the peaks of the endotherms and exotherms in the cooling cycle and the second heating cycle respectively.

**(c) Tensile Modulus**

Tensile modulus was performed according to BTM00101. Specimens according to 5A were prepared and measured according to ISO 527.

**(d) Thermal conductivity**

The thermal conductivity of the composites has been tested by means of the Laser flash method (ISO 18755; LFA 447, Netzsch GmbH) at 3M (ESK).

**(e) Polymer density**

The polymer density is measured according to the density immersion method described in ISO 1183.

**(f) Density of carbonaceous structures**

Densities are determined using a method similar to ASTM D7481 - 09, i.e. weighing a specified volume of material after at least three taps.

**(g) BET**

BET is determined using ASTM D6556-04.

**(h) Volatility**

Volatilities are determined using thermogravimetric analysis under nitrogen.

**(i) PSD**

Particle size distribution is determined by scanning electron microscopy without statistical analysis.

**(j) Scanning Electron Microscopy (SEM) for Figure 2**

The powder sample was sprinkled onto an aluminum stub affixed with conductive carbon sticker for SEM imaging. The SEM micrograph was taken using a Zeiss Ultraplus field emission SEM using the InLens secondary electron detector. An acceleration voltage of 10kV, aperture of 7 $\mu$m and a working distance of 2.6 mm were used to acquire this image.

**(k) Scanning Electron Microscopy (SEM) for Figures 3 and 4**

SEM micrographs were collected using a FEI Quanta 200F. The rGOW particles were placed on a sample holder and imaged as-is, typically with a secondary electron detector, spot 2, and 5 kV acceleration voltage.

**(l) Compounding**

Filled polypropylene compositions having incorporated carbonaceous structures were prepared as follows:

All samples were produced using a Brabender mixer (Plasticoder PLE-331). The mixer was preheated to 210°C prior to the addition of the resin. The rotation speed was set to 10 rpm. The resin was added first followed by the filler. As soon as all the components were added, the rotation speed was increased to 50rpm and kept for 10 minutes. After the mixing was done, the composition was pelleted and samples were prepared for the relevant tests.

**3. Results**

In the following Tables properties of the obtained compositions are shown.

## Table 2

| Polymer Base Resin | Filler Type | Filler Amount (wt%) | Young's Modulus (MPa) |
|---|---|---|---|
| PP1 | - | 0 | 1955 |
| PP1 | GNP M-25 (CE1) | 1 | 2630 |
| | | 5 | 2436 |
| | | 8 | 3045 |
| | | 10 | 3170 |
| | | 12 | 3227 |
| | | 14 | 3357 |
| | | 16 | 3403 |
| PP1 | CS-4 (IE1) | 1 | 2513 |
| | | 2.5 | 3013 |
| | | 6 | 3489 |
| PP1 | CS-5 (IE2) | 1 | 2490 |
| | | 2.5 | 2757 |
| | | 5 | 3302 |
| PP2 | - | 0 | 2270 |
| PP2 | CS-5 (IE3) | 1 | 2747 |
| | | 2.5 | 3010 |
| | | 5 | 3404 |

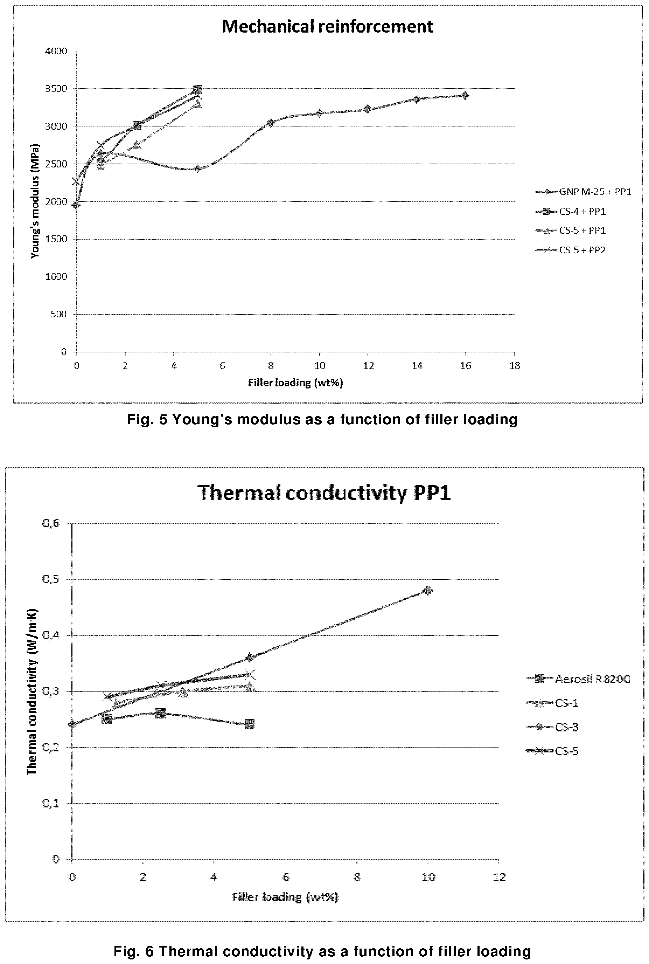

In Table 2 and Figure 5 the Young's modulus data of the different compositions can be seen. For all the compositions comprising filler an increase in Young's modulus (tensile strength) is observed. For the samples comprising GNP M-25 (comparative example 1, CE1), a gradual increase in Young's modulus is observed that reaches values of ~2,800-3,000 MPa at a loading range of 8-16 wt%. The CS-4-based samples (inventive example 1, IE1) exhibit a superior and steep increase of the reinforcement level that reaches values of greater than 2500 MPa at a filler content of only 1 wt% and a Young's modulus of greater than 3000 MPa at a filler content of only 2.5 wt%. The CS-5-based samples (inventive example 2, IE2) with PP1 as the matrix resin exhibit a sharp increase of the reinforcement level that reaches values of about 2500 MPa at a filler content of only 1 wt% and a value of greater than 2700 MPa at a filler content of only 2.5 wt% and greater than 3300 MPa at a filler content of only 5 wt%, respectively. The CS-5-based samples (inventive) with PP2 as the matrix resin exhibit an even steeper increase of the reinforcement level that reaches values of greater than 2700 MPa at a filler content of only 1 wt% and a value of greater than 3000 MPa at a filler content of only 2.5 wt% and greater than 3400 MPa at a filler content of only 5 wt%, respectively. Thus, the inventive embodiments substantially increase tensile strength of the filled polypropylene resin compared to the previously known fillers.

**Table 3**

| Polymer Base Resin | Filler Type | Filler Amount (wt%) | Thermal conductivity (W/m·K) |
|---|---|---|---|
| PP1 | - | 0 | 0.24 |
| PP1 | CS-1 (IE4) | 1.25 | 0.28 |
| | | 3.125 | 0.3 |
| | | 5 | 0.31 |
| PP1 | CS-3 (IE5) | 5 | 0.36 |
| | | 10 | 0.48 |
| PP1 | CS-5 (IE2) | 1 | 0.29 |
| | | 2.5 | 0.31 |
| | | 5 | 0.33 |
| PP1 | Aerosil R8200 (CE2) | 1 | 0.25 |
| | | 2.5 | 0.26 |
| | | 5 | 0.24 |

Table 3 and Figure 6 shows that the incorporation of carbonaceous structures CS-3 into PP2 matrix (inventive example 5, IE5) almost double the thermal conductivity with respect to the comparative samples which contain Aerosil R8200 (comparative example 2, CE2). In the comparative samples, a plateau is observed probably due to agglomeration. Both IE5 and IE2 exhibit improved thermal conductivity compared to CE2.

Although the present invention has been described with reference to various embodiments, those skilled in the art will recognize that changes may be made without departing from the scope of the invention. It is intended that the detailed description be regarded as illustrative, and that the appended claims including all the equivalents are intended to define the scope of the invention.

**Claims**

1. A polypropylene composition comprising

    (a) a propylene polymer base resin, and
    (b) carbonaceous structures

    wherein the carbonaceous structures (b) have a BET surface area of at least 200 $m^2$/g and a density of less than 100 g/L, and wherein the propylene polymer base resin (a) has a density in the range 0.860-0.970 $g/cm^3$ and is selected from the group consisting of isotactic polypropylene with tacticity of at least 50%; random and heterophasic propylene copolymers; and blends of these polymers including other olefinic or non-olefinic polymers, where these other polymers do not exceed 40 wt% of the total propylene polymer composition.

2. The polypropylene composition according to claim 1, wherein the carbonaceous structures (b) have a density of between 15 and 100 g/L.

3. The polypropylene composition according to claim 1, wherein the carbonaceous structures (b) have a density of between 5 and 15 g/L.

**4.** The polypropylene composition according any one of the preceding claims, wherein the carbonaceous structures (b) have volatiles of less than 30%.

**5.** The polypropylene composition according to any one of the preceding claims, wherein the length L of the carbonaceous structures (b) is at least 1 μm.

**6.** The polypropylene composition according to any one of the preceding claims, wherein the diameter d of the carbonaceous structures (b) is from 50 nm to 200 μm.

**7.** The polypropylene composition according to any one of the preceding claims, wherein the carbonaceous structures (b) have an aspect ratio of length L to diameter d that is 1:1 or more.

**8.** The polypropylene composition according to any one of the preceding claims, wherein said polypropylene composition has a tensile modulus satisfying the equation:

$$y = k \cdot x + b \qquad\qquad (I)$$

wherein x is the amount of the carbonaceous structures in the polypropylene composition, expressed in wt% of the total weight of the polypropylene composition;
k is a coefficient having values from 200 to 300; and
b is the tensile modulus of the propylene polymer base resin.

**9.** The polypropylene composition according to claim 8, wherein said coefficient k may have values from 220 to 295, preferably 240 to 290, more preferably 248 to 287.

**10.** The polypropylene composition according to any one of the preceding claims, wherein said composition has a tensile modulus of at least 3000 MPa, determined according to ISO 527-2, at a loading of said carbonaceous structures of below 5 wt%, based on the weight of the total polypropylene composition.

**11.** The polypropylene composition according to any one of the preceding claims, wherein the composition has a tensile modulus of at least 2500 MPa, determined according to ISO 527-2, at a loading of said carbonaceous structures of below 2.5 wt%, based on the weight of the total polypropylene composition.

**12.** The polypropylene composition according to any one of the preceding claims, wherein said polypropylene composition has thermal conductivity satisfying the equation:

$$\sigma = m \cdot x + l \qquad\qquad (II)$$

wherein x is the amount of the carbonaceous structures in the polypropylene composition, expressed in wt% of the total weight of said polypropylene composition;
m is a coefficient having values from 0.01 to 0.07; and
l is the thermal conductivity of said propylene polymer base resin.

**13.** The polypropylene composition according to claim 12, wherein said coefficient m has values from 0.015 to 0.05, preferably from 0.02 to 0.03.

**14.** The polypropylene composition according to any one of the preceding claims, wherein said polypropylene composition has thermal conductivity of at least 0.28 W/m·K.

**15.** The polypropylene composition according to any one of the preceding claims, wherein the added amount of said carbonaceous structures is in the range of from 0.1-10 wt% based on the total weight of the polyolefin composition.

**16.** The polypropylene composition according to any one of the preceding claims, further comprising a solid conductive filler (c) different from carbonaceous structures.

**17.** The polypropylene composition according to claim 16, wherein the solid conductive filler (c) is carbon black.

13

18. An automotive article comprising the polypropylene composition as defined in any one of the preceding claims.

19. Use of a polypropylene composition as defined in any one of the preceding claims 1 to 17 in a component of an automobile.

FIG. 1a

FIG. 1b

FIG. 2

**Fig. 3 SEM picture of CS-1 and GNP M-25**

**Fig. 4 SEM picture of CS-2 and GNP M-25**

Fig. 5 Young's modulus as a function of filler loading

Fig. 6 Thermal conductivity as a function of filler loading

Europäisches
Patentamt

European
Patent Office

Office européen
des brevets

# EUROPEAN SEARCH REPORT

Application Number

EP 17 20 6398

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/072448 A1 (SHI JINJUN [US] ET AL) 19 March 2009 (2009-03-19) * paragraph [0071]; claim 10 * * paragraph [0041]; claim 14 * * paragraphs [0003], [0030] - [0033] * ----- | 1-19 | INV. C08K3/04 |
| A,D | WO 03/002652 A1 (CIBA SC HOLDING AG [CH]; CAMENZIND HUGO [CH]; HERBST HEINZ [DE]; WUNDE) 9 January 2003 (2003-01-09) * tables 1, 2, 4 * * claim 25 * ----- | 1-19 | |

TECHNICAL FIELDS
SEARCHED     (IPC)

C08K

The present search report has been drawn up for all claims

| Place of search | Date of completion of the search | Examiner |
|---|---|---|
| Munich | 11 May 2018 | Gerber, Myriam |

EPO FORM 1503 03.82 (P04C01)

## ANNEX TO THE EUROPEAN SEARCH REPORT
## ON EUROPEAN PATENT APPLICATION NO.

EP 17 20 6398

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2018

| Patent document cited in search report | Publication date | Patent family member(s) | Publication date |
|---|---|---|---|
| US 2009072448 A1 | 19-03-2009 | NONE | |
| WO 03002652 A1 | 09-01-2003 | AT 419296 T | 15-01-2009 |
| | | BR 0210754 A | 20-07-2004 |
| | | CA 2450168 A1 | 09-01-2003 |
| | | CN 1522276 A | 18-08-2004 |
| | | DK 1401948 T3 | 14-04-2009 |
| | | EP 1401948 A1 | 31-03-2004 |
| | | ES 2316605 T3 | 16-04-2009 |
| | | JP 4271566 B2 | 03-06-2009 |
| | | JP 2004530786 A | 07-10-2004 |
| | | KR 20040024571 A | 20-03-2004 |
| | | MX PA03011834 A | 26-03-2004 |
| | | US 2004204521 A1 | 14-10-2004 |
| | | US 2008153948 A1 | 26-06-2008 |
| | | WO 03002652 A1 | 09-01-2003 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2006231792 A1
- US 2004127621 A1
- US 2002054995 A1
- US 2006241237 A1
- WO 03024602 A1
- WO 03002652 A

### Non-patent literature cited in the description

- **SCHNIEPP.** *Journal of Physical Chemistry B,* 2006, vol. 110, 8535
- **STANKOVICH et al.** *Nature,* 2006, vol. 442, 282
- **SCHNIEPP.** *Journal of Physical Chemistry B,* 2006, vol. 110, 853